# EUROPÄISCHE PATENTSCHRIFT

(11) **EP 4 643 430 B1**
(45) Veröffentlichungstag und Bekanntmachung des Hinweises auf die Patenterteilung: **18.11.2026**
(21) Anmeldenummer: 24742228.0
(22) Anmeldetag: 08.07.2024
(51) Int. Cl.: H02J 3/14, H02J 4/00

(54) **STEUERN EINER ELEKTROLYSEANLAGE ZUM ERZEUGEN VON WASSERSTOFF UND SAUERSTOFF DURCH EINE ELEKTROLYSE VON WASSER**
CONTROL OF AN ELECTROLYSIS SYSTEM FOR PRODUCING HYDROGEN AND OXYGEN BY ELECTROLYSING WATER
COMMANDE D'UNE INSTALLATION D'ÉLECTROLYSE POUR PRODUIRE DE L'HYDROGÈNE ET DE L'OXYGÈNE PAR ÉLECTROLYSE DE L'EAU

(30) Priorität: 31.07.2023 DE 102023207312
(43) Veröffentlichungstag der Anmeldung: 05.11.2025
(73) Patentinhaber: Siemens Energy Global GmbH & Co. KG, 81739 München (DE)
(72) Erfinder: ACHTER, Thomas, 91301 Forchheim (DE); LOKU, Fisnik, 90439 Nürnberg (DE)
(86) Internationale Anmeldenummer: PCT/EP2024/069156
(87) Internationale Veröffentlichungsnummer: WO 2025/026653

(56) Entgegenhaltungen:
- EP-A1- 3 556 905
- CA-A1- 3 143 876
- DE-A1- 102020 124 964
- BINTZ STEFFEN ET AL: "Parallel Rectifier for Regenerative Hydrogen Production Utilizing a Combination of Thyristor and PWM-based Topologies", 2018 20TH EUROPEAN CONFERENCE ON POWER ELECTRONICS AND APPLICATIONS (EPE'18 ECCE EUROPE), EPE ASSOCIATION, 17 September 2018 (2018-09-17), XP033433214
- BINTZ STEFFEN ET AL: "Repetitive Controller for Low Grid Current Harmonics in a Hybrid Parallel Electrolysis Rectifier", NEIS CONFERENCE 2019, 19 September 2019 (2019-09-19), pages 50 - 55, XP055866584, ISBN: 978-3-8007-5152-5
- SOLANKI JITENDRA ET AL: "High-current variable-voltage rectifiers: state of the art topologies", IET POWER ELECTRONICS, IET, UK, vol. 8, no. 6, 1 June 2015 (2015-06-01), pages 1068 - 1080, XP006052403, ISSN: 1755-4535, DOI: 10.1049/IET-PEL.2014.0533

## Beschreibung

Die Erfindung betrifft eine Elektrolyseanlage zum Erzeugen von Wasserstoff und Sauerstoff durch eine Elektrolyse von Wasser, mit einer Mehrzahl von Elektrolysevorrichtungen, die an eine mit einer elektrischen Wechselspannung beaufschlagte elektrische Energieversorgungsleitung angeschlossen sind, um für den bestimmungsgemäßen Elektrolysebetrieb über die Energieversorgungsleitung mit elektrischer Energie versorgt zu werden, wobei die Energieversorgungsleitung zum elektrischen Koppeln einer elektrischen Energiequelle ausgebildet ist, wobei die Elektrolysevorrichtungen jeweils eine Energieversorgungseinheit und wenigstens ein mit der Energieversorgungseinheit elektrisch gekoppeltes Elektrolysemodul aufweisen, wobei das wenigstens eine Elektrolysemodul eine Mehrzahl von Elektrolysezellen aufweist, die elektrisch zumindest teilweise in Reihe geschaltet oder parallelgeschaltet sind, wobei die Energieversorgungseinheit der Elektrolysevorrichtungen jeweils wenigstens einen Transformator und wenigstens eine Gleichrichtereinheit aufweisen, wobei der wenigstens eine Transformator eine mit der Energieversorgungsleitung elektrisch gekoppelte Primärwicklung und eine an eine Wechselspannungsseite der wenigstens einen Gleichrichtereinheit angeschlossene Sekundärwicklung aufweist, wobei eine Gleichspannungsseite der wenigstens einen Gleichrichtereinheit mit dem wenigstens einen Elektrolysemodul elektrisch gekoppelt ist. Weiterhin betrifft die Erfindung ein Verfahren zum Erzeugen von Wasserstoff und Sauerstoff durch eine Elektrolyse von Wasser mittels einer Elektrolyseanlage, die eine Mehrzahl von Elektrolysevorrichtungen aufweist, wobei die Elektrolysevorrichtungen jeweils eine Energieversorgungseinheit und wenigstens ein mit der Energieversorgungseinheit elektrisch gekoppeltes Elektrolysemodul aufweisen, wobei das wenigstens eine Elektrolysemodul eine Mehrzahl von Elektrolysezellen aufweist, die elektrisch zumindest teilweise in Reihe geschaltet oder parallel geschaltet sind, wobei die Elektrolysevorrichtungen über eine mit einer elektrischen Wechselspannung beaufschlagte elektrische Energieversorgungsleitung für den bestimmungsgemäßen Elektrolysebetrieb mit elektrischer Energie versorgt werden, wobei die Energieversorgungsleitung eine elektrische Energiequelle elektrisch koppelt, wobei die Energieversorgungseinheiten der Elektrolysevorrichtungen jeweils wenigstens einen Transformator und wenigstens eine Gleichrichtereinheit aufweisen, wobei der wenigstens eine Transformator eine mit der Energieversorgungsleitung elektrisch gekoppelte Primärwicklung und eine an eine Wechselspannungsseite der wenigstens einen Gleichrichtereinheit angeschlossene Sekundärwicklung aufweist, wobei eine Gleichspannungsseite der wenigstens einen Gleichrichtereinheit mit dem wenigstens einen Elektrolysemodul elektrisch gekoppelt ist.

Gattungsgemäße Elektrolyseanlagen, Elektrolysevorrichtungen und Verfahren hierfür sind im Stand der Technik umfänglich bekannt, sodass es eines gesonderten druckschriftlichen Nachweises hierzu nicht bedarf. Gattungsgemäße Elektrolysetechnologien nutzen eine kaskadierende Anforderungssteuerphilosophie zum Steuern der Leistung einer jeweiligen Elektrolysevorrichtung der Elektrolyseanlage. Für eine einzelne oder eine kleine Anzahl von Elektrolysevorrichtungen ist es erforderlich, die Leistung entsprechend der verfügbaren elektrischen Energie, die zum Erzeugen von Wasserstoff und Sauerstoff seitens der elektrischen Energiequelle verfügbar ist, einzustellen. Für große Elektrolyseanlagen, zum Beispiel mit mehr als zehn Elektrolysevorrichtungen, ist dies wegen der individuellen Steuerungen und der sich einstellenden Leistungsfaktorkorrektur sowie der Filterung von Harmonischen, um Netzbetreiberanforderungen zu erfüllen, eine große Herausforderung.

Wegen der hohen Leistungsanforderung von Elektrolyseanlagen, die mit einer entsprechenden Strombeanspruchung einher geht, sind thyristorbasierte Gleichrichtereinheiten üblich, um den erforderlichen Gleichstrom, zum Beispiel in einem Bereich von etwa 7 bis etwa 10 kA zu erreichen. Aufgrund des großen Wirkungsgrads und der großen Zuverlässigkeit bei Hochstromanwendungen, wird deren Einsatz auch bei großen Elektrolyseanlagen erwartet. Die hohen Stromanforderungen sind derzeit ein Hauptgrund, weshalb spannungsbasierte Wandler, zum Beispiel unter Nutzung von transistorbasierten DC/DC-Wandlern, derzeit nicht angewendet werden.

Thyristorbasierte Gleichrichtereinheiten haben jedoch in Bezug auf eine Strombeanspruchung der Energiequelle einen wesentlichen Nachteil in Bezug auf Harmonische. Dies erfordert in der Regel zusätzliche Komponenten, beispielsweise aktive und/oder passive Filter, sowie Leistungsfaktorkompensationseinheiten, um die energiequellenseitigen Anforderungen, insbesondere in Bezug auf eine Blindleistungsanforderung in einem Wechselstromnetz der Energiequelle, erfüllen zu können. Dies führt jedoch zu entsprechend großen zusätzlichen Kosten.

Darüber hinaus erfordern thyristorbasierte Gleichrichtereinheiten in der Regel drei Steuergeräte, und zwar ein zentrales Steuergerät zum Steuern einer Stufung der gestuft einstellbaren Primärwicklung des Transformators sowie ein zusätzliches Steuergerät zum Steuern einer Wirkleistung und Liefern eines entsprechenden Steuersignals für ein Gleichstromsteuergerät, das zum Steuern des Gleichstroms abhängig von dem vorgenannten Steuersignal durch Steuern eines Zündwinkels für die Thyristoren der thyristorbasierten Gleichrichtereinheit dient und das eine phasenverriegelte Schleifensteuerung (englisch: Phase-Locked-Loop; PLL) aufweist, um die Zündwinkel der Thyristoren bezüglich der an der Wechselspannungsseite der Gleichrichtereinheit anliegenden Wechselspannung einstellen zu können.

Diese Steuergeräte beeinflussen die Harmonischen und den Leistungsfaktor. Für jede der Elektrolysevorrichtungen sind das zentrale Steuergerät, das zusätzliche Steuergerät und das Gleichstromsteuergerät erforderlich. Auch hierdurch entsteht hoher Aufwand.

Der Erfindung liegt die Aufgabe zugrunde, den Aufwand in Bezug auf die Freisetzung von Harmonischen sowie einem ungünstigen Leistungsfaktor für große Elektrolyseanlagen zu reduzieren.

Als Lösung werden mit der Erfindung Elektrolyseanlagen und Verfahren gemäß den unabhängigen Ansprüchen vorgeschlagen.

Vorteilhafte Weiterbildungen ergeben sich durch Merkmale der abhängigen Ansprüche.

Bezüglich einer Elektrolyseanlage der gattungsgemäßen Art wird gemäß einem ersten Aspekt mit der Erfindung insbesondere vorgeschlagen, dass die Primärwicklung des wenigstens einen Transformators von wenigstens einer ersten der Elektrolysevorrichtungen gestuft einstellbar ausgebildet ist und die wenigstens eine Gleichrichtereinheit der Energieversorgungseinheit dieser Elektrolysevorrichtung ausgebildet ist, ungesteuert betrieben zu werden, wobei die wenigstens eine Gleichrichtereinheit der Energieversorgungseinheit von wenigstens einer zweiten der Elektrolyseeinrichtungen ausgebildet ist, abhängig von durch die Energiequelle bereitstellbarer elektrischer Energie gesteuert betrieben zu werden.

In Bezug auf eine gattungsgemäße Elektrolyseanlage wird mit der Erfindung gemäß einem zweiten Aspekt insbesondere vorgeschlagen, dass die Elektrolyseanlage eine an die Energieversorgungsleitung angeschlossene Energiespeichereinheit zum reversiblen Speichern von elektrischer Energie aufweist, wobei die Energiespeichereinheit ausgebildet ist, elektrische Energie kontinuierlich steuerbar zu speichern und abzugeben, wobei die Primärwicklung des wenigstens einen Transformators von wenigstens einer ersten der Elektrolyseeinrichtungen gestuft einstellbar ist und die wenigstens eine Gleichrichtereinheit der Energieversorgungseinheit dieser Elektrolysevorrichtung ausgebildet ist, ungesteuert betrieben zu werden.

In Bezug auf ein gattungsgemäßes Verfahren wird mit der Erfindung gemäß dem ersten Aspekt insbesondere vorgeschlagen, dass die Primärwicklung des wenigstens einen Transformators von wenigstens einer ersten der Elektrolysevorrichtungen gestuft einstellbar ausgebildet ist und die wenigstens eine Gleichrichtereinheit der Energieversorgungseinheit dieser Elektrolysevorrichtung ungesteuert betrieben wird, wobei die wenigstens eine Gleichrichtereinheit der Energieversorgungseinheit von wenigstens einer zweiten der Elektrolyseeinrichtungen abhängig von durch die Energiequelle bereitstellbarer elektrischer Energie gesteuert betrieben wird.

In Bezug auf ein gattungsgemäßes Verfahren wird mit der Erfindung gemäß dem zweiten Aspekt insbesondere vorgeschlagen, dass eine an die Energieversorgungsleitung angeschlossene Energiespeichereinheit, die ausgebildet ist, elektrische Energie reversibel zu speichern, die elektrische Energie kontinuierlich steuerbar speichert und abgibt, wobei die Primärwicklung des wenigstens einen Transformators von wenigstens einer ersten der Elektrolysevorrichtungen gestuft einstellbar ausgebildet ist und die wenigstens eine Gleichrichtereinheit der Energieversorgungseinheit dieser Elektrolysevorrichtung ungesteuert betrieben wird.

Die Erfindung basiert unter anderem auf dem Gedanken, dass die Leistung der Elektrolyseanlage abhängig von der verfügbaren elektrischen Leistung der Energiequelle angepasst werden kann. Hierzu wird vorgeschlagen, dass bei wenigstens einer ersten Elektrolysevorrichtung der wenigstens eine Transformator hinsichtlich seiner Primärwicklung gestuft eingestellt werden kann, wodurch die Sekundärspannung der Sekundärwicklung entsprechend variiert werden kann, sodass abhängig von der jeweils in einer jeweiligen Stufe eingestellten Wechselspannung die Leistung verändert werden kann. Bei dieser Elektrolysevorrichtung ist ferner vorgesehen, dass die wenigstens eine Gleichrichtereinheit ausgebildet ist, ungesteuert betrieben zu werden. Das heißt, bei dieser wenigstens einen Elektrolysevorrichtung wird die Leistung im Wesentlichen ausschließlich durch Einstellen einer jeweiligen Stufe der Primärwicklung variiert. Eine Leistungseinstellung mittels der wenigstens einen Gleichrichtereinheit braucht hier nicht vorgesehene zu sein. Dadurch kann diese wenigstens eine Gleichrichtereinheit vergleichsweise kostengünstig ausgebildet sein. Insbesondere benötigt sie keine Steuerung.

Zugleich gibt es wenigstens eine zweite Elektrolysevorrichtung, bei der die wenigstens eine Gleichrichtereinheit abhängig von durch die Energiequelle bereitstellbarer elektrischer Leistung gesteuert betrieben werden kann. Vorzugsweise wird bei der wenigstens einen ersten Elektrolysevorrichtung das Einstellen der Stufe der Primärwicklung des wenigstens einen Transformators ebenfalls abhängig von der durch die Energiequelle bereitstellbaren elektrischen Energie gesteuert. Zu diesem Zweck kann von einer übergeordneten Steuerung beziehungsweise einem Steuergerät beziehungsweise Steuereinheit ein entsprechendes Steuersignal bereitgestellt werden, mittels welchem die gewünschten Steuerfunktionalitäten erreicht werden können. Für die wenigstens eine erste Elektrolysevorrichtung und für die wenigstens eine zweite Elektrolysevorrichtung können die Steuersignale unterschiedlich sein.

Diese Konstruktion ermöglicht es, einerseits für die wenigstens eine erste Elektrolysevorrichtung die wenigstens eine Gleichrichtereinheit zum Beispiel mittels Dioden zu realisieren, sodass die ungesteuerte Gleichrichtereinheit auf einfache Weise realisiert werden kann. Die Gleichrichtereinheit kann an die mittels der Sekundärspannung bereitgestellte Wechselspannung angepasst ausgebildet sein. Vorzugsweise ist die Gleichrichtereinheit nach Art einer Brückenschaltung ausgebildet. Darüber hinaus ist die Gleichrichtereinheit angepasst an die durch die Energiequelle bereitgestellte Wechselspannung ausgebildet. Dabei ist zu berücksichtigen, dass die Wechselspannung eine mehrphasige Wechselspannung sein kann, insbesondere drei Phasen aufweisen kann. Die Erfindung ist jedoch nicht auf eine bestimmte Anzahl von Phasen beschränkt. Die Transformatoren und die Gleichrichtereinheiten sind an die Anzahl der Phasen der Wechselspannung angepasst ausgebildet.

Beispielsweise kann die Wechselspannung als dreiphasige Wechselspannung von der Energiequelle und infolgedessen auch vom Transformator bereitgestellt werden, wodurch die Gleichrichtereinheit beispielsweise als Sechs-Puls-Brückenschaltung, als 12-Puls-Brückenschaltung, als 24-Puls-Brückenschaltung oder dergleichen ausgebildet sein kann. Für die wenigstens eine erste Elektrolysevorrichtung ist daher nur ein vergleichsweise geringer Steuerungsaufwand zum Einstellen der Leistung erforderlich, nämlich nur insoweit, als dass mittels einer Stellvorrichtung der Elektrolysevorrichtung abhängig von dem Steuersignal die entsprechende Stufe an der Primärwicklung eingestellt zu werden braucht. Die Stellvorrichtung kann zum Beispiel ein oder mehrere Schaltelemente aufweisen, mit denen ein oder mehrere Anzapfungen der Primärwicklung selektiv gekoppelt werden können, um die gewünschte Stufe der gestuft einstellbaren Primärwicklung einstellen zu können.

Bei der wenigstens einen zweiten Elektrolysevorrichtung ist stattdessen vorgesehen, dass die wenigstens eine Gleichrichtereinheit eine gesteuerte Gleichrichtereinheit ist. Diese kann beispielsweise ähnlich wie die wenigstens eine Gleichrichtereinheit der ersten Elektrolysevorrichtung ausgebildet sein, wobei jedoch die Dioden durch Thyristoren ersetzt sein können. Für die Thyristoren ist dann eine entsprechende Thyristorsteuerung vorgesehen, die es ermöglicht, mittels Phasenanschnitt eine entsprechende Leistungssteuerung zu realisieren. Zugleich braucht hier bei dem wenigstens einen Transformator nicht unbedingt eine gestufte Primärwicklung vorgesehen zu sein. Dem Grunde nach kann der wenigstens eine Transformator der wenigstens einen zweiten Elektrolysevorrichtung jedoch genauso wie der wenigstens eine Transformator der wenigstens einen ersten Elektrolysevorrichtung ausgebildet und einstellbar sein.

Durch diese Konstruktion ergibt sich, dass der Steuerungsaufwand für die Elektrolyseanlage insgesamt deutlich reduziert werden kann. Abhängig von der Wechselspannung und der Leistungsaufnahme sowie den elektrischen Eigenschaften der Elektrolysevorrichtungen stellt sich energiequellenseitig ein Wechselstrom ein, der bei der wenigstens einen ersten Elektrolysevorrichtung einen sehr kleinen oder sogar vernachlässigbaren Anteil an Harmonischen in Bezug auf den Wechselstrom hat. Ebenso kann erreicht werden, dass der Leistungsfaktor der wenigstens einen ersten Elektrolysevorrichtung möglichst groß ist, vorzugsweise nahe bei 1 liegt, sodass der Aufwand für eine Leistungsfaktorkorrektur sowie auch zur Behandlung von Harmonischen erheblich reduziert werden kann. Die Auswirkungen auf die Energiequelle hinsichtlich der Anforderungen in Bezug auf Netzrückwirkungen können daher sehr klein sein. Dadurch, dass lediglich für die wenigstens eine zweite Elektrolysevorrichtung eine entsprechende Filterbeziehungsweise Korrekturmaßnahme vorgesehen zu werden braucht, kann insgesamt auch der Aufwand zur Reduzierung von Netzrückwirkungen gegenüber dem Stand der Technik sehr klein gehalten werden. Die Erfindung ermöglicht es daher, den Aufwand für die Elektrolyseanlage nicht nur insgesamt zu reduzieren, sondern zugleich auch einen Steuerungsaufwand.

Im Wesentlichen kann der gleiche Effekt auch gemäß dem zweiten Aspekt erreicht werden, indem anstelle oder ergänzend zur wenigstens einen zweiten Elektrolysevorrichtung eine Energiespeichereinheit an die Energieversorgungsleitung angeschlossen ist, die zum reversiblen Speichern von elektrischer Energie dient. Die Energiespeichereinheit ist ausgebildet, die elektrische Energie kontinuierlich steuerbar zu speichern und abzugeben. Dies kann zum Beispiel dadurch erreicht werden, dass die Energiespeichereinheit einen geeigneten elektrischen Energiespeicher wie einen oder mehrere Kondensatoren, einen oder mehrere Induktivitäten und/oder dergleichen aufweist. Der wenigstens eine elektrische Energiespeicher kann mittels einer Energieumformereinheit beziehungsweise einer Energiewandlereinheit gesteuert an die Energieversorgungsleitung angeschlossen werden, sodass abhängig von einem Steuersignal, welches beispielsweise ebenfalls von der Steuereinheit bereitgestellt sein kann, der Energieversorgungsleitung elektrische Energie zuführt beziehungsweise elektrische Energie von der Energieversorgungsleitung aufgenommen werden kann. Dadurch ist es zum Beispiel möglich, eine Leistungsfaktorkorrektur zu realisieren und/oder auch Harmonische zu kompensieren. Der hierfür vorgesehene Energiewandler kann beispielsweise mittels Transistoren oder auch schnell schaltender Thyristoren realisiert sein. Mittels der Energiespeichereinheit kann dem Grunde nach ein vergleichbarer elektrischer Effekt in Bezug auf die elektrische Energiequelle erreicht werden, wie es mit der wenigstens einen zweiten Elektrolysevorrichtung erreicht werden kann. Ist nämlich elektrische Leistung durch die elektrische Energiequelle in einem Maße verfügbar, welche größer als eine Leistungsaufnahme durch die wenigstens eine erste Elektrolysevorrichtung bei einer vorgegebenen ersten Stufe, jedoch kleiner als die Leistung bei einer nächstgrößeren Stufe der Primärwicklung des wenigstens einen Transformators ist, kann diese Differenzleistung mittels der Energiespeichereinheit abgefangen werden.

Mit der Energiespeichereinheit kann für einen vorgebbaren Zeitraum die elektrische Leistung, die in der eingestellten Stufe der Primärwicklung des Transformators der wenigstens einen ersten Elektrolysevorrichtung ist, aufgenommen werden. Sobald der wenigstens eine Energiespeicher eine entsprechend große Energiemenge aufgenommen hat, kann bei der wenigstens einen ersten Elektrolysevorrichtung die nächsthöhere Stufe an der Primärwicklung des wenigstens einen Transformators eingestellt werden und die Speichereinheit kann die aufgenommene Energie über die Energieversorgungsleitung an die wenigstens eine erste Elektrolysevorrichtung abgeben. Dadurch, dass auf diese Weise ein im Wesentlichen kontinuierlicher Leistungsübergang möglich ist, können Netzrückwirkungen auf die elektrische Energiequelle weitgehend reduziert, wenn nicht sogar nahezu vollständig vermieden werden. Zugleich kann eine große Stellgeschwindigkeit auch bei großer Leistung erreicht werden.

Insgesamt ergibt sich durch die Erfindung gemäß dem ersten und dem zweiten Aspekt, dass besonders große Elektrolyseanlagen mit einer Mehrzahl von Elektrolysevorrichtungen sehr effizient und vergleichsweise netzrückwirkungsarm betrieben werden können. Dabei kann zugleich der Aufwand reduziert werden und die Möglichkeit des Einsatzes von diodenbasierten Gleichrichtereinheiten erlaubt es, auch den Wirkungsgrad zu verbessern.

Der wenigstens eine Transformator der Elektrolysevorrichtungen ist vorzugsweise an die bereitgestellte Wechselspannung und die für die Elektrolysezwecke erforderliche Gleichspannung angepasst ausgebildet. Handelt es sich um eine einphasige Wechselspannung, ist der Transformator vorzugsweise als einphasiger Transformator ausgebildet. Handelt es sich beispielsweise bei der Wechselspannung um eine mehrphasige, insbesondere eine dreiphasige, Wechselspannung, ist der Transformator entsprechend an die Anzahl der Phasen angepasst ausgebildet. Der wenigstens eine Transformator kann bei einer dreiphasigen Wechselspannung beispielsweise primärseitig in Dreieckschaltung ausgebildet sein. Sekundärseitig kann vorgesehen sein, dass der Transformator eine Dreieckschaltung oder eine Sternschaltung aufweist. Die Erfindung ist jedoch nicht auf die Nutzung dieser Schaltungsarten von Transformatoren beschränkt.

Eine Elektrolysevorrichtung kann eine elektrische Leistungsaufnahme von beispielsweise 17 MW aufweisen. Für die Stufung der Primärwicklung des wenigstens einen Transformators kann vorgesehen sein, dass zwei jeweilige aufeinanderfolgende Stufen einen vorgegebenen beziehungsweise vorgebbaren Leistungsunterschied bewirken. Vorzugsweise ist der Leistungsunterschied zwischen den aufeinanderfolgenden Stufen im Wesentlichen gleich. Bei alternativen Ausgestaltungen kann hiervon jedoch auch abgewichen werden.

Eine Bemessungsleistung für die Energieversorgungseinheit der wenigstens einen zweiten Elektrolysevorrichtung beziehungsweise der Energiespeichereinheit entspricht vorzugsweise zumindest dem vorgenannten Leistungsunterschied zwischen zwei aufeinanderfolgenden Stufen der Primärwicklung des Transformators der wenigstens einen ersten Elektrolysevorrichtung.

Insbesondere wird vorgeschlagen, dass eine Bemessungsleistung der Energiespeichereinheit in Bezug auf das Speichern und das Abgeben von elektrischer Energie größer als eine Leistungsdifferenz von zwei aufeinanderfolgenden Stufen der gestuft einstellbaren Primärwicklung im bestimmungsgemäßen Betrieb der wenigstens einen ersten Elektrolysevorrichtung ist. Dadurch ist es möglich, bei einer vorgegebenen eingestellten Stufe der Primärwicklung der wenigstens einen ersten Elektrolysevorrichtung eine verfügbare Überschussleistung der elektrischen Energiequelle aufzunehmen beziehungsweise im umgekehrten Fall eine entsprechende Leistung abzugeben. Dadurch, dass die Energiespeichereinheit hinsichtlich des Speicherns von elektrischer Energie und des Abgebens von elektrischer Energie im Wesentlichen kontinuierlich eingestellt werden kann, kann somit auch eine verfügbare Leistung der elektrischen Energiequelle im Wesentlichen vollständig genutzt werden, wenn sie nicht genau der elektrischen Leistung entspricht, die die wenigstens eine erste Elektrolysevorrichtung bei einer bestimmten eingestellten Stufe aufnimmt.

Es wird ferner vorgeschlagen, dass der wenigstens eine Transformator zum gestuften Einstellen der Primärwicklung einen Stufenschalter mit wenigstens fünf Stufen, vorzugsweise wenigstens neun Stufen, aufweist. Der Stufenschalter kann natürlich auch deutlich mehr Stufen aufweisen. Je größer die Anzahl der Stufen gewählt ist, desto feiner ist die Einstellmöglichkeit in Bezug auf die wenigstens eine erste Elektrolysevorrichtung. Dies ermöglicht es unter Umständen, die Bemessungsleistung für die wenigstens eine zweite Elektrolysevorrichtung beziehungsweise die Energiespeichereinheit entsprechend kleiner zu wählen. Dadurch lassen sich weitere Vorteile insbesondere in Bezug auf die Netzrückwirkung erreichen. Vorteilhaft ist dies unter anderem bei besonders großen Leistungen.

Gemäß einer Weiterbildung weist die Elektrolyseanlage eine Steuereinheit auf, die ausgebildet ist, ein Energieverfügbarkeitssignal zu empfangen und abhängig vom Energieverfügbarkeitssignal einerseits die Stufe der Primärwicklung des wenigstens einen Transformators von der wenigstens einen ersten Elektrolysevorrichtung einzustellen und andererseits zumindest die elektrische Leistung der wenigstens einen zweiten Elektrolysevorrichtung mittels deren Gleichrichtereinheit oder zumindest die elektrische Leistung der Energiespeichereinheit einzustellen. Die Steuereinheit kann zu diesem Zweck mit der elektrischen Energiequelle in Kommunikationsverbindung stehen. Handelt es sich bei der elektrischen Energiequelle um ein Energieversorgungsnetz, beispielsweise ein öffentliches Energieversorgungsnetz, kann vorgesehen sein, dass die Steuereinheit mit einer Leitzentrale des Energieversorgungsnetzes in Kommunikationsverbindung steht. Die Steuereinheit kann ausgebildet sein, abhängig von der verfügbaren elektrischen Leistung entsprechende Steuersignale für die wenigstens eine erste und die wenigstens eine zweite Elektrolyseeinrichtung und gegebenenfalls auch für die Energiespeichereinheit bereitzustellen, sodass die gewünschte elektrische Leistung durch die Elektrolyseanlage aufgenommen werden kann. Auf diese Weise ist es möglich, besonders einfach und schnell auch auf wechselnde Lastzustände in Bezug auf die elektrische Energiequelle reagieren zu können. Trotz der großen Leistung der Elektrolyseanlage kann ein stabiler Betrieb der elektrischen Energiequelle erreicht werden, insbesondere wenn es sich bei der elektrischen Energiequelle um ein Energieversorgungsnetz handelt.

Es wird ferner vorgeschlagen, dass eine Summe der Bemessungsleistung der Energiespeichereinheit in Bezug auf das Speichern und Abgeben von elektrischer Energie und der Bemessungsleistung der wenigstens einen gesteuert betreibbaren Gleichrichtereinheit der Energieversorgungseinheit von der wenigstens einen zweiten Elektrolyseeinrichtung größer als die Leistungsdifferenz von zwei aufeinanderfolgenden Stufen der gestuft einstellbaren Primärwicklung im bestimmungsgemäßen Betrieb der wenigstens einen ersten Elektrolysevorrichtung ist. Diese Weiterbildung richtet sich unter anderem insbesondere auf eine Ausgestaltung, bei der die Elektrolyseanlage neben der wenigstens einen ersten Elektrolysevorrichtung auch wenigstens eine zweite Elektrolysevorrichtung und eine Energiespeichereinheit aufweist. Durch den gemeinsamen Betrieb kann die Leistungsdifferenz zwischen zwei aufeinanderfolgenden Stufen der wenigstens einen ersten Elektrolysevorrichtung auf die wenigstens eine zweite Elektrolysevorrichtung und die Energiespeichereinheit entsprechend verteilt werden. Das ermöglicht es, den Aufwand für eine kontinuierlich einstellbare Leistung auf die wenigstens eine zweite Elektrolysevorrichtung und die Elektrolyseeinheit zu verteilen.

Die für die erfindungsgemäßen Elektrolyseanlagen angegebenen Vorteile und Wirkungen gelten entsprechend auch für die erfindungsgemäßen Verfahren und umgekehrt. Folglich können Verfahrensmerkmale auch als entsprechende Vorrichtungsmerkmale und umgekehrt formuliert sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar.

Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.
- FIG 1: eine schematische Schaltbilddarstellung einer Elektrolyseanlage mit zwei Elektrolysevorrichtungen und einer Energiespeichereinheit, die an eine Energieversorgungsleitung angeschlossen sind;
- FIG 2: eine schematische Diagrammdarstellung einer gestuften Einstellung einer Primärwicklung eines Transformators einer Energieversorgungseinheit einer Elektrolysevorrichtung gemäß FIG 1; und
- FIG 3: eine schematische Diagrammdarstellung einer Leistungsanpassung der Elektrolyseanlage gemäß FIG 1 an eine verfügbare Leistung einer Wechselspannungsquelle.

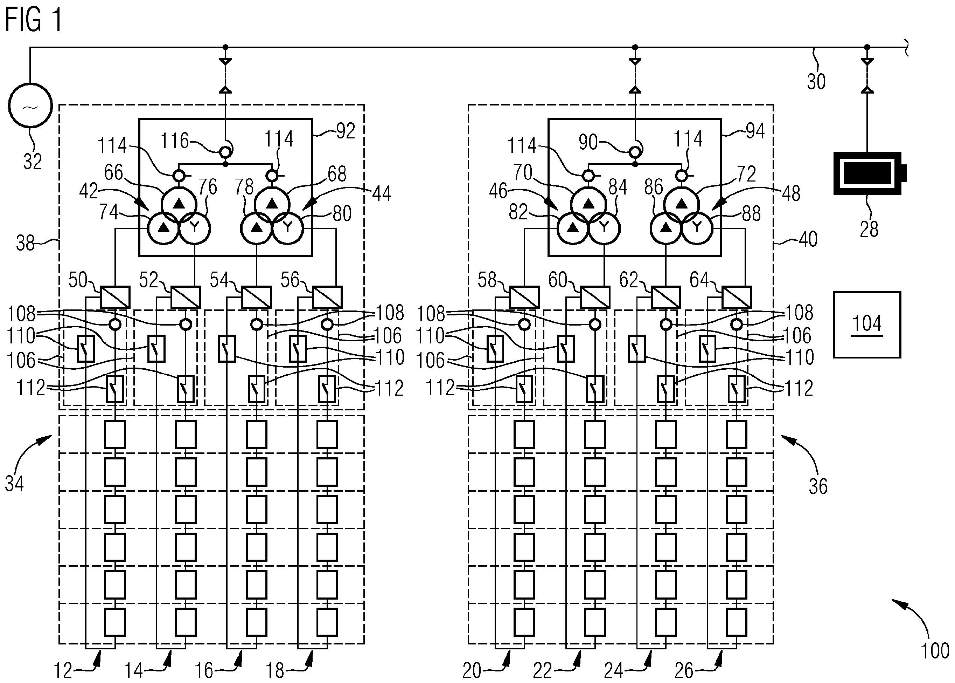

In FIG 1 zeigt in einer schematischen Schaltbilddarstellung eine Elektrolyseanlage 10, die dem Erzeugen von Wasserstoff und Sauerstoff durch eine Elektrolyse von Wasser dient. Zu diesem Zweck weist die Elektrolyseanlage 10 zwei Elektrolysevorrichtungen 34, 36 auf, die an eine mit einer dreiphasigen elektrischen Wechselspannung beaufschlagte elektrische Energieversorgungsleitung 30 angeschlossen sind, um für den bestimmungsgemäßen Elektrolysebetrieb über die Energieversorgungsleitung 30 mit elektrischer Energie versorgt zu werden. In der vorliegenden Ausgestaltung ist vorgesehen, dass die Energieversorgungsleitung 30 dazu dient, eine dreiphasige Wechselspannungsquelle 32 als elektrische Energiequelle zu koppeln. Bei der dreiphasigen Wechselspannungsquelle 32 handelt es sich vorliegend um ein öffentliches Energieversorgungsnetz. In alternativen Ausgestaltungen kann hier natürlich auch ein Inselnetz oder der gleichen vorgesehen sein. Die Elektrolyseanlage 10 kann natürlich auch mehr als zwei Elektrolysevorrichtungen 34, 36 aufweisen. Wie der Fachmann erkennt, ist die Anzahl der Elektrolysevorrichtungen zum Erläutern der Erfindung im Wesentlichen nicht relevant. Das Wechselspannungsnetz 32 ist vorliegend für einen dreiphasigen Betrieb ausgebildet.

Die Elektrolysevorrichtungen 34, 36 weisen jeweils eine Energieversorgungseinheit 38, 40 und eine Mehrzahl von vorliegend in Reihe geschalteten Elektrolysemodulen 12, 14, 16, 18, 20, 22, 24, 26 auf, die in Reihenschaltung an die jeweilige Energieversorgungseinheit 38, 40 angeschlossen sind. So sind beispielsweise sechs Elektrolysemodule 12 in Reihe geschaltet an die Energieversorgungseinheit 38 angeschlossen. Ebenso sind sechs in Reihe geschaltete Elektrolysemodule 14 an die Energieversorgungseinheit 38 angeschlossen. Gleichermaßen sind jeweils sechs Elektrolysemodule 16 sowie auch sechs Elektrolysemodule 18 jeweils an die Energieversorgungseinheit 38 angeschlossen. Entsprechendes gilt für die Elektrolysevorrichtung 36, bei welcher Reihenschaltungen aus Elektrolysemodulen 20, 22, 24, 26, die ebenfalls jeweils sechs in Reihe geschaltete Elektrolysemodule aufweisen, separat an die Energieversorgungseinheit 40 angeschlossen sind.

In den FIG ist nicht dargestellt, dass jedes der Elektrolysemodule 12, 14, 16, 18, 20, 22, 24, 26 eine vorgegebene Anzahl von Elektrolysezellen aufweist, die elektrisch in vorgegebener Weise in Matrixschaltung verschaltet sind. Je nach Konstruktion kann jedoch auch vorgesehen sein, dass die Elektrolysezellen innerhalb eines jeweiligen der Elektrolysemodule 12 bis 26 lediglich parallelgeschaltet oder lediglich in Reihe geschaltet sind. Vorliegend ist vorgesehen, dass die Elektrolysezellen sowie auch die hieraus gebildeten Elektrolysemodule 12 bis 26 im Wesentlichen gleich ausgebildet sind. In den FIG ist ebenfalls nicht dargestellt, dass jede der Elektrolysezellen beziehungsweisejedes der Elektrolysemodule einen jeweiligen Anschluss für zu elektrolysierendes Wasser und jeweilige Anschlüsse für durch die Elektrolyse erzeugten Wasserstoff beziehungsweise Sauerstoff aufweist. Der detaillierte Aufbau einer jeweiligen Elektrolysezelle beziehungsweise eines jeweiligen der Elektrolysemodule 12 bis 26 ist für die Erfindung jedoch nicht relevant, weshalb von weiteren Ausführungen hierzu vorliegend abgesehen wird.

In der vorliegenden Ausgestaltung gemäß Fig. 1 ist ferner vorgesehen, dass die Elektrolyseanlage 10 eine an die Energieversorgungsleitung 30 angeschlossene Energiespeichereinheit 28 zum kontinuierlich einstellbaren reversiblen Speichern von elektrischer Energie aufweist. Die Energiespeichereinheit 28 ist ausgebildet, elektrische Energie im Wesentlichen kontinuierlich steuerbar zu speichern und abzugeben. Zu diesem Zweck weist die Energiespeichereinheit 28 vorliegend nicht weiter dargestellte elektrische Energiespeicher auf, die beispielsweise Kondensatoren, Akkumulatoren, Induktivitäten und/oder der gleichen aufweisen können. Die Energiespeicher sind mittels eines ebenfalls nicht weiter dargestellten Wechselrichters mit der Energieversorgungsleitung 30 elektrisch gekoppelt. Der Wechselrichter kann gleichermaßen auch als Gleichrichter, insbesondere als gesteuerter Gleichrichter, dienen. Dadurch ist es möglich, die Energiezufuhr beziehungsweise die Energieabfuhr von der Energiespeichereinheit 28 zur Energieversorgungsleitung 30 in vorgebbarer Weise zu steuern.

Die Elektrolyseanlage 10 weist ferner eine Steuereinheit 104 auf, mittels der die Funktionalität der Elektrolyseanlage 10 gesteuert werden kann. Unter anderem stellt die Steuereinheit 104 ein drittes Steuersignal für die Energiespeichereinheit 28 bereit, mittels dem der Energiefluss von und zu der Energiespeichereinheit 28 gesteuert werden kann. Insbesondere kann mit dem dritten Steuersignal der nicht dargestellte Wechselrichter hinsichtlich seiner Funktionalität und seiner Leistung in bidirektionaler Richtung gesteuert werden.

Die Steuereinheit 104 stellt ferner ein erstes Steuersignal für die Energieversorgungseinheit 40 der ersten Elektrolysevorrichtung 36 und ein zweites Steuersignal für die Energieversorgungseinheit 38 der zweiten Elektrolysevorrichtung 34 bereit. Mit dem ersten und dem zweiten Steuersignal können unter anderen die elektrischen Leistungen der Elektrolysevorrichtungen 34, 36 zumindest teilweise gesteuert werden.

Nicht dargestellt ist, dass die Steuereinheit 104 mit einer Leitzentrale der Wechselspannungsquelle 32 in Kommunikationsverbindung steht und von dieser mit Daten bezüglich der verfügbaren Leistung versorgt wird, die von der Elektrolyseanlage 10 genutzt werden kann.

Gleichermaßen steht die Steuereinheit 104 in signaltechnischer Verbindung mit den Energieversorgungseinheiten 38, 40 sowie der Energiespeichereinheit 28 und erhält von diesen unter anderem Signale bezüglich des bestimmungsgemäßen Betriebs der jeweiligen Elektrolysevorrichtungen 34, 36, insbesondere in Bezug auf einen jeweiligen Elektrolysestrom, der die jeweiligen Elektrolysemodule 12 bis 26 durchströmt.

Die zweite Energieversorgungseinheit 38 weist eine Transformatoreinheit 92 auf, die ihrerseits zwei Transformatoren 42, 44 aufweist. Die Transformatoren 42, 44 sind vorliegend identisch für einen dreiphasigen Betrieb ausgebildet. Jeder der Transformatoren 42, 44 weist eine jeweilige Primärwicklung 66, 68 auf, die vorliegend in Dreieckschaltung geschaltet ist. Die Primärwicklungen 66, 68 sind über jeweilige Stromwandler 114 und einen gemeinsamen Stufenschalter 116 mit der Energieversorgungsleitung 30 elektrisch verbunden. Mittels des Stufenschalters 116 ist es möglich, Anzapfungen der Primärwicklungen 66, 68 elektrisch zu kontaktieren und auf diese Weise eine Leistungsbeziehungsweise Spannungsanpassung gestuft vorzunehmen. Die Transformatoren 42, 44 sind daher gestuft einstellbar ausgebildet.

Darüber hinaus weist der Transformator 42 zwei Sekundärwicklungen 74, 76 auf, wobei eine erste der Sekundarwicklungen 74 in Dreieckschaltung und eine zweite der Sekundärwicklung 76 in Sternschaltung geschaltet ist. An die Sekundärwicklung 74 ist eine Gleichrichtereinheit 50 angeschlossen und an die Sekundärwicklung 76 ist eine Gleichrichtereinheit 52 angeschlossen. Bezüglich des zweiten Transformators 44 gilt ein entsprechender Aufbau, wobei eine Sekundärwicklung 78 in Dreieckschaltung an eine Gleichrichtereinheit 54 angeschlossen ist, wohingegen eine weitere Sekundärwicklung 80 in Sternschaltung an eine Gleichrichtereinheit 56 angeschlossen ist.

Vorliegend ist vorgesehen, dass die Gleichrichtereinheiten 50 bis 56 abhängig von durch die Energiequelle 32 bereitstellbarer elektrischer Energie mittels des zweiten Steuersignals gesteuert werden können. Zu diesem Zweck ist vorgesehen, dass die Gleichrichtereinheiten 50 bis 56 jeweils thyristorbasierte Brückenschaltungen aufweisen, mittels denen eine gesteuerte Gleichrichtung nach dem Phasenanschnittsprinzip realisiert werden kann. Vorliegend erfolgt die Steuerung der Gleichrichtereinheiten 50 bis 56 abhängig vom zweiten Steuersignal der Steuereinheit 76.

Die Gleichrichtereinheiten 50 bis 56 sind mit ihren jeweiligen Wechselspannungsseiten an die jeweiligen Sekundärwicklungen 74, 76, 78, 80 angeschlossen. Eine jeweilige Gleichspannungsseite der Gleichrichtereinheiten 50, 52, 54, 56 ist an eine jeweilige Schalteinheit 106 angeschlossen, die vorliegend ebenfalls im Wesentlichen identisch ausgebildet sind. Die Schalteinheiten 106 weisen einen jeweiligen Stromwandler 108 zum Erfassen eines Gleichstroms der jeweiligen Gleichrichtereinheit 50, 52, 54, 56 auf. Jeweilige Sensorsignale der Stromwandler 108 werden an die Steuereinheit 104 übermittelt. Darüber hinaus weisen die Schalteinheiten 106 jeweilige Schaltelemente 110, 112 auf, mit denen an die Schalteinheiten 106 angeschlossenen Elektrolysemodule 12, 14, 16, 18 bipolar elektrisch getrennt werden können. Dadurch ist es mit den Schalteinheiten 106 möglich, die Elektrolysemodule 12, 14, 16, 18 elektrisch freizuschalten. Die Schaltelemente 110, 112 sind ebenfalls mittels des zweiten Steuersignals der Steuereinheit 104 hinsichtlich ihres Schaltzustands steuerbar. Vorliegend ist vorgesehen, dass die Schaltelemente 110, 112 jeweils im Wesentlichen den gleichen Schaltzustand abhängig vom zweiten Steuersignal einnehmen.

Die Elektrolysevorrichtung 34 ist somit in der vorliegenden Ausgestaltung auf zwei unterschiedliche Weisen hinsichtlich ihrer Leistung steuerbar ausgebildet, und zwar einerseits dadurch, dass mittels des Stufenschalters 116 eine jeweilige Leistungsstufe eingestellt werden kann, wohingegen mit den vorzugsweise im Wesentlichen kontinuierlich gesteuert betreibbaren Gleichrichtereinheiten 50, 52, 54, 56 innerhalb einer voreingestellten Leistungsstufe die Leistung abhängig vom zweiten Steuersignal nahezu kontinuierlich eingestellt werden kann.

Die erste Elektrolysevorrichtung 36 ist im Wesentlichen weitgehend gleich zur zweiten Elektrolysevorrichtung 34 ausgebildet. Die erste Elektrolysevorrichtung 36 weist eine Transformatoreinheit 94 auf, die ebenfalls zwei Transformatoren 46, 48 aufweist, deren Primärwicklungen 70, 72 über jeweilige Stromwandler 114 und einen gemeinsamen Stufenschalter 90 an die Energieversorgungsleitung 30 angeschlossen sind. Auch hier sind die Primärwicklungen 46, 48 in Dreieckschaltung geschaltet, wohingegen eine Sekundärwicklung 82 des Transformators 46 ebenfalls in Dreieckschaltung und eine Sekundärwicklung 84 des Transformators 46 in Sternschaltung geschaltet ist. Beim Transformator 48 ist die Primärwicklung 72 ebenfalls in Dreieckschaltung geschaltet, wohingegen eine Sekundärwicklung 86 in Dreieckschaltung und eine Sekundärwicklung 88 in Sternschaltung geschaltet sind. Insofern entspricht die Konstruktion der Transformatoreinheit 94 der Transformatoreinheit 92. Eine Energieversorgungseinheit 40 der Elektrolysevorrichtung 36 umfasst die Transformatoreinheit 94.

Die Energieversorgungseinheit 40 weist ferner Gleichrichtereinheiten 58, 60, 62, 64 auf, wobei die Gleichrichtereinheit 58 mit ihrer Wechselspannungsseite an die Sekundärwicklung 82, die Gleichrichtereinheit 60 mit ihrer Wechselspannungsseite an die Sekundärwicklung 84, die Gleichrichtereinheit 62 mit ihrer Wechselspannungsseite an die Sekundärwicklung 86 und die Gleichrichtereinheit 64 mit ihrer Wechselspannungsseite an die Sekundärwicklung 88 angeschlossen sind. Die jeweiligen Gleichspannungsseiten sind an jeweilige Schalteinheiten 106 angeschlossen, die den zuvor bereits erläuterten Schalteinheiten 106 entsprechen, weshalb von weiteren Ausführungen hierzu abgesehen wird. An jede der Schalteinheiten 106 ist eine Reihenschaltung aus sechs jeweiligen Elektrolysemodulen 20, 22, 24, 26 angeschlossen. Inweit entspricht diese Konstruktion ebenfalls der der Elektrolysevorrichtung 34.

Die Elektroysevorrichtung 36 unterscheidet sich von der Elekrolysevorrichtung 34 lediglich durch die Energieversorgungseinheit 40, und zwar vorliegend durch die Gleichrichtereinheiten 58, 60, 62, 64, die als ungesteuerte Brückengleichrichterschaltung ausgebildet sind, die vorliegend durch entsprechende Dioden realisiert sind. Die Brückengleichrichterschaltung in ungesteuerter Form ist dem Fachmann bekannt, weshalb von weiteren Erläuterungen hierzu vorliegend abgesehen wird. Im Unterschied zur Elektrolysevorrichtung 34 kann daher bei der Elektrolysevorrichtung 36 die Leistung lediglich mit dem Stufenschalter 90 verändert werden. Es ist somit lediglich eine gestufte Veränderung der Leistung möglich.

Auch hier ist die Energieversorgungseinheit 40 mittels des ersten Steuersignals der Steuereinheit 104 hinsichtlich der Einstellmöglichkeiten steuerbar.

Die Steuersignale, und zwar das erste, das zweite und das dritte Steuersignal der Steuereinheit 104 sind entsprechend ausgebildet, sodass die gewünschten Steuerfunktionalitäten für die erste und die zweite Elektrolysevorrichtung 34, 36 sowie die Energiespeichereinheit 28 realisiert werden können. Zugleich werden entsprechende Signale von den Energieversorgungseinheiten 38, 40 sowie auch der Energiespeichereinheit 28 an die Steuereinheit 104 übermittelt, sodass jeweilige Betriebszustände von der Steuereinheit 104 ermittelt werden können.

In der vorliegenden Ausgestaltung ist vorgesehen, dass der Stufenschalter 116, 90 jeweils eine Einstellung mit 10 Stufen ermöglicht. Auch wenn das in den Figuren nicht weiter dargestellt ist, ist es dem Grunde nach möglich, dass die Elektrolyseanlage 10 ergänzend zusätzliche Elektrolysevorrichtungen 34 und/oder 36 aufweisen kann.

Vorzugsweise sind die Bemessungsungsleistungen der einzelnen Komponenten und der Elektrolysevorrichtungen 34, 36 entsprechend angepasst gewählt, sodass eine - wie im Folgenden erläutert - im Wesentlichen kontinuierliche Leistungseinstellung in Bezug auf die Wechselspannungsquelle 32 erreicht werden kann, und zwar mit möglichst geringen Netzrückwirkungen. Dies wird im Folgenden noch weiter erläutert. Dadurch ist es möglich, nicht nur Aufwand in Bezug auf die Steuerung der Elektrolyseanlage 10 im Vergleich zum Stand der Technik zu reduzieren, sondern es ist darüber hinaus auch möglich, Aufwand für Netzrückwirkungen auf die Wechselspannungsquelle 32 zu reduzieren. Dies ist besonders vorteilhaft, weil die Elektrolyseanlage 10 in der Regel für vergleichsweise große Leistungsumsätze ausgerüstet ist. Obwohl eine variierende Leistungsaufnahme durch die Elektrolyseeinrichtung 10 realisiert sein soll, können Netzrückwirkungen mit geringem Aufwand weitgehend reduziert werden. Das heißt, dass, insbesondere unter Berücksichtigung der großen Leistung, aufwendige Filtermaßnahmen für Netzrückwirkungen, beispielsweise in Bezug auf Harmonische oder den Leistungsfaktor oder dergleichen, reduziert werden können.

Um den erforderlichen Gleichstrom für die Elektrolysemodule 12 bis 26 bereitstellen zu können, ist es erforderlich, dass die entsprechenden Gleichrichtereinheiten 50 bis 64 mit einer entsprechenden Wechselspannung versorgt werden. Unter Berücksichtigung einer variablen Impedanznatur der Elektrolysemodule 12 bis 26, die beispielsweise als PEM-Module ausgebildet sein können, kann dies durch die Stufenschalter 116, 90 in den Transformatoreinheiten 92, 94 erreicht werden. Gleichwohl ist zu berücksichtigen, dass eine jeweilige eingestellte Stufe des Stufenschalters 116, 90 einen signifikanten Einfluss auf den Leistungsfaktor hat, der auf der Energieversorgungsleitung 30 festgestellt werden kann. Dabei zeigt sich, dass, je kleiner die gewählte Stufe am Stufenschalter ist, desto größer ist der resultierende Leistungsfaktor.

Darüber hinaus ist zu beachten, dass gesteuerte Gleichrichteeinheiten, wie die Gleichrichteeinheiten 50 bis 56, ebenfalls Einfluss auf den Leistungsfaktor haben. Dabei zeigt sich, dass, je kleiner der Zündwinkel für die Thyristoren ist, desto größer ist der Leistungsfaktor. Grundsätzlich hat sich gezeigt, dass, wenn der Zündwinkel aktiv zwischen etwa 6° bis etwa 20° eingestellt wird, und eine angemessen gewählte Stufe des Stufenschalters 116, 90 gewählt ist, der Leistungsfaktor im Wesentlichen etwa 0,9 betragen kann. Für größere Werte in Bezug auf den Leistungsfaktor ist eine entsprechende Leistungsfaktorkorrektureinheit erforderlich, zum Beispiel umfassend eine Kondensatorbank oder dergleichen. Dies kann zum Beispiel auch mit der Energiespeichereinheit 28 erreicht werden. Durch geeignete Steuermaßnahmen kann die Energiespeichereinheit 28 genutzt werden, um den Leistungsfaktor zu erhöhen.

In Bezug auf Harmonische des Wechselstroms der Energieversorgungsleitung 30 kann ferner festgestellt werden, dass diese in der Regel im Wesentlichen durch das Steuern der Thyristoren bestimmt sind. Allgemein beträgt ein Wert der gesamtharmonischen Störung des Wechselstroms (englisch: AC current total harmonic distortion; THDI) für ein 24-pulsiges System einer jeweiligen Gleichrichtereinheit 50 bis 56 etwa 6%. Jedoch ist zu bedenken, dass selbst bei optimaler Gleichstromsteuerung eine Verbesserung in Bezug auf die Harmonischen durch eine Vergrößerung des Wirkleistungsflusses bis etwa 2% bis 3% erreicht werden kann, woraus sich ein Wert der Störungen von etwa 3% bis etwa 4% ergeben kann. Hinsichtlich der meisten Wechselspannungsquellen, die auf Energieversorgungsnetzen wie dem öffentlichen Energieversorgungsnetz basieren, ist jedoch eine Störung von weniger als 2% erforderlich, sodass in der Regel entsprechende Filtermaßnahmen vorgesehen werden müssen.

Mit der Elektrolyseanlage gemäß Fig. 1 ist es möglich, den Aufwand für die Leistungsfaktorkorrektur und die Filterung in Bezug auf Harmonische deutlich zu reduzieren.

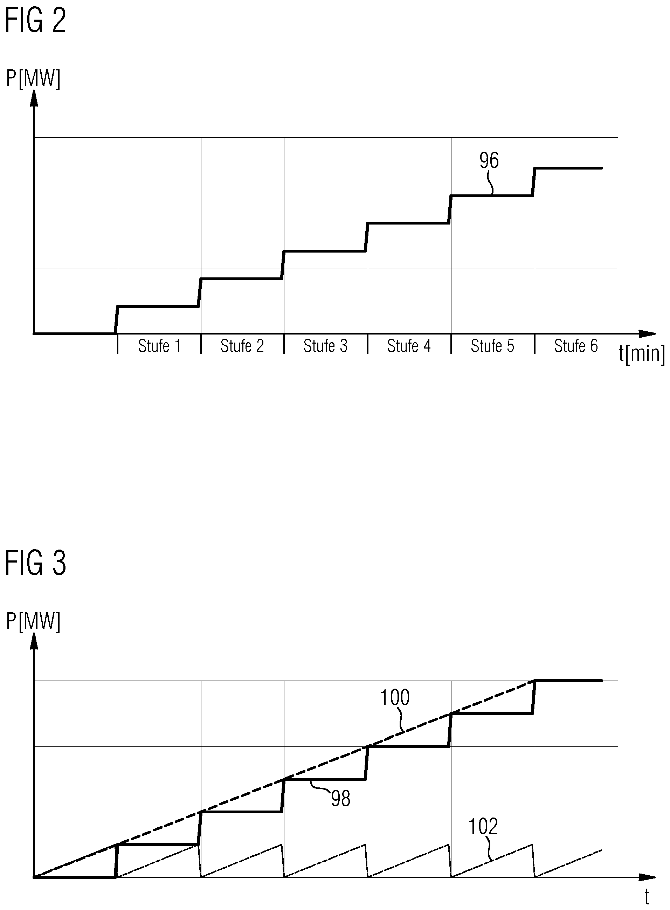

Fig. 2 zeigt in einer schematischen Diagrammdarstellung die Betätigung eines der Stufenschalter 116, 90 mit einem Graphen 96, wobei eine Ordinate einer jeweiligen Stufe des jeweiligen Stufenschalters 116, 90 und eine Abszisse der Zeit in Minuten zugordnet ist. Aus Fig. 2 ist ersichtlich, dass für das vorgesehene Ausführungsbeispiel eine Erhöhung einer jeweiligen Stufe um 1 im Abstand von etwa 0,5 Minuten vorgesehen ist.

Fig. 3 zeigt nun in einer weiteren schematischen Diagrammdarstellung, wie für eine derartige Veränderung der Stufen des Stufenschalters 116 der Energiespeichereinheit 28 und/oder der Steuerung der Gleichrichtereinheiten 50 bis 56 ein nahezu kontinuierlicher Anstieg der aufgenommenen Leistung durch die Elektrolyseanlage 10 erreicht werden kann. Dies in Fig. 3 anhand des Graphen 100 dargestellt. Eine Ordinate des Diagramms in Fig. 3 ist der elektrischen Leistung in MW zugeordnet, die von der Elektrolyseanlage aufgenommen wird. Ein Graph 98 ist der eingestellten Stufe des Stufenschalters 90 der Elektrolysevorrichtung 36 zugeordnet.

Wie bereits zuvor erläutert, sind die Gleichrichtereinheiten 58 bis 64 dieser Elektrolysevorrichtung 36 nicht steuerbar. Daher wird die Leistung, die die Elektrolyseanlage 10 insgesamt aufnimmt mit jeder Stufe des Stufenschalters 90 steigen, so wie dies auch anhand des Graphen 98 dargestellt ist. Da die durch die Elektrolyseanlage 10 aufgenommene Leistung, die die durch die Wechselspannungsquelle 32 bereitgestellte Leistung gemäß dem Graphen 100 nicht übersteigen darf, ergeben harte Leistungssprünge von jeweils etwa 1 MW, wie aus dem Diagramm gemäß Fig. 3 ersichtlich ist. Derartige Leistungssprünge sind jedoch energieversorgungsseitig unerwünscht und können zu erheblichen Störungen führen. Deshalb ist nunmehr vorgesehen, dass die Energiespeichereinheit 28 gemäß dem Graphen 102 betrieben wird. Das bedeutet, dass zum Erhöhen der Leistung gemäß dem Graphen 100 lediglich eine kontinuierliche Leistungsanpassung gemäß dem Graphen 102 mit der Energiespeichereinheit 28 erforderlich ist, die kontinuierlich betrieben werden kann. Das heißt, dass lediglich eine Leistungsfaktorkorrektur und/oder eine Anpassung in Bezug auf harmonische für die Leistung von 0 bis 1 MW vorgesehen zu werden braucht. Die anderen Leistungsschritte können gestuft erfolgen und zwar vorzugsweise mittels der Elektrolysevorrichtung 36, bei der lediglich eine gestufte Leistungsvariation vorgesehen ist. Aufgrund der ungesteuerten Gleichrichtereinheiten 58 bis 64 ist der Einfluss auf Harmonische im Wesentlichen zu vernachlässigen. Das heißt, mittels der Energiespeichereinheit 28 kann eine Leistungsfaktoranpassung bei der gestuften Erhöhung der Leistung mittels des Stufenschalters 90 realisiert werden, wohingegen eine Filterung von Harmonischen im Wesentlichen nur für die Energiespeichereinheit 28 vorgesehen zu werden braucht.

In einem alternativen Szenario wird die kontinuierliche Leistungsanpassung mittels Elektrolysevorrichtung 34 und deren Gleichrichtereinheiten 50 bis 56 realisiert. Zu diesem Zweck können Zündwinkel der auf Thyristoren basierenden Gleichrichtereinheiten 50 bis 56 entsprechend gesteuert werden. Eine Anpassung des Leistungsfaktors und eine Filterung von Harmonischen in Bezug auf den Strom brauchen deshalb lediglich für die Elektrolysevorrichtung 34 vorgesehen zu sein.

Gemäß einer weiteren Ausgestaltung kann vorgesehen sein, dass sowohl die Energiespeichereinheit 28 als auch die Elektrolysevorrichtung 34 zur kontinuierlichen schrittweisen Leistungsanpassung eingesetzt werden, also in Zusammenwirkung. Gleichwohl bleibt der vorteilhafte Effekt erhalten, dass nämlich nicht für die gesamte Leistung, die die Elektrolyseanlage 10 aufnimmt, entsprechende Vorkehrungen in Bezug auf die Netzrückwirkungen getroffen zu werden brauchen. Es ist also nicht nur der eingesparte Steueraufwand in Bezug auf die Elektrolysevorrichtung 36 gegenüber dem Stand der Technik zu verzeichnen, sondern darüber hinaus auch der reduzierte Aufwand in Bezug auf Netzrückwirkungen, weil für die Elektrolysevorrichtung 36 dieser Aufwand erheblich reduziert, wenn nicht teilweise sogar eingespart, werden kann.

Die Erfindung ist natürlich nicht darauf begrenzt, bei Gleichrichtereinheiten Thyristoren oder dergleichen einzusetzen, sondern es können zumindest teilweise auch Transistoren, insbesondere Insulated-Gate-Bipolar-Transistor (IGBT)-Einheiten und/oder dergleichen zum Einsatz kommen. Für die Auslegung der Elektrolyseanlage 10 kann ferner berücksichtigt werden, dass Bemessungsleistungen für die Energiespeichereinheit 28 und/oder die Elektrolysevorrichtungen 34, 36 unterschiedlich sein können.

Vorzugsweise sind diese Bemessungsleistungen - abhängig von der Anzahl der Elektrolysevorrichtungen und/oder der Energiespeichereinheiten - entsprechend gewählt, sodass eine wie zuvor erläuterte Energieanpassung gemäß Fig. 3 erreicht werden kann. Insbesondere brauchen die Leistungsstufen, wie sie anhand des Graphen 98 in Fig. 3 dargestellt sind, nicht 1 MW zu betragen. Die Leistung kann natürlich bedarfsgerecht abweichend gewählt sein.

Die Erfindung ermöglicht es, auf variierende Leistungsbereitstellungen des Wechselspannungsnetzes 32 flexibel reagieren zu können, und ermöglicht es, verfügbare Energie möglichst optimal zu nutzen, wobei der Aufwand für Entstörung beziehungsweise Netzrückwirkungen und die Filterung von Harmonischen vergleichsweise gering ausfallen kann. Dadurch erhöht sich auch ein Wirkungsgrad der Elektrolyseanlage 10.

Die Ausführungsbeispiele dienen ausschließlich der Erläuterung der Erfindung und sind für diese nicht beschränkend.

## Patentansprüche

1. Elektrolyseanlage (10) zum Erzeugen von Wasserstoff und Sauerstoff durch eine Elektrolyse von Wasser, mit einer Mehrzahl von Elektrolysevorrichtungen (34, 36), die an eine mit einer elektrischen Wechselspannung beaufschlagte elektrische Energieversorgungsleitung (30) angeschlossen sind, um für den bestimmungsgemäßen Elektrolysebetrieb über die Energieversorgungsleitung (30) mit elektrischer Energie versorgt zu werden, wobei die Energieversorgungsleitung (30) zum elektrischen Koppeln einer elektrischen Energiequelle (32) ausgebildet ist, wobei die Elektrolysevorrichtungen (34, 36) jeweils eine Energieversorgungseinheit (38, 40) und wenigstens ein mit der Energieversorgungseinheit (38, 40) elektrisch gekoppeltes Elektrolysemodul (12, 14, 16, 18, 20, 22, 24, 26) aufweisen, wobei das wenigstens eine Elektrolysemodul (12, 14, 16, 18, 20, 22, 24, 26) eine Mehrzahl von Elektrolysezellen aufweist, die elektrisch zumindest teilweise in Reihe geschaltet oder parallelgeschaltet sind, wobei die Energieversorgungseinheiten (38, 40) der Elektrolysevorrichtungen (34, 36) jeweils wenigstens einen Transformator (42, 44, 46, 48) und wenigstens eine Gleichrichtereinheit (50, 52, 54, 56, 58, 60, 62, 64) aufweisen, wobei der wenigstens eine Transformator (42, 44, 46, 48) eine mit der Energieversorgungsleitung (30) elektrisch gekoppelte Primärwicklung (66, 68, 70, 72) und eine an eine Wechselspannungsseite der wenigstens einen Gleichrichtereinheit (50, 52, 54, 56, 58, 60, 62, 64) angeschlossene Sekundärwicklung (74, 76, 78, 80, 82, 84, 86, 88) aufweist, wobei eine Gleichspannungsseite der wenigstens einen Gleichrichtereinheit (50, 52, 54, 56, 58, 60, 62, 64) mit dem wenigstens einen Elektrolysemodul (12, 14, 16, 18, 20, 22, 24, 26) elektrisch gekoppelt ist,
**dadurch gekennzeichnet, dass**
die Primärwicklung (66, 68, 70, 72) des wenigstens einen Transformators (42, 44, 46, 48) von wenigstens einer ersten der Elektrolysevorrichtungen (36) gestuft einstellbar ausgebildet ist und die wenigstens eine Gleichrichtereinheit (58, 60, 62, 64) der Energieversorgungseinheit (40) dieser Elektrolysevorrichtung (36) ausgebildet ist, ungesteuert betrieben zu werden, wobei die wenigstens eine Gleichrichtereinheit (50, 52, 54, 56) der Energieversorgungseinheit (38) von wenigstens einer zweiten der Elektrolysevorrichtungen (34) ausgebildet ist, abhängig von durch die Energiequelle (32) bereitstellbarer elektrischer Energie gesteuert betrieben zu werden.

2. Elektrolyseanlage nach Anspruch 1, **gekennzeichnet durch**, eine an die Energieversorgungsleitung (30) angeschlossene Energiespeichereinheit (28) zum reversiblen Speichern von elektrischer Energie, wobei die Energiespeichereinheit (28) ausgebildet ist, elektrische Energie kontinuierlich steuerbar zu speichern und abzugeben.

3. Elektrolyseanlage (10) zum Erzeugen von Wasserstoff und Sauerstoff durch eine Elektrolyse von Wasser, mit einer Mehrzahl von Elektrolysevorrichtungen (34, 36), die an eine mit einer elektrischen Wechselspannung beaufschlagte elektrische Energieversorgungsleitung (30) angeschlossen sind, um für den bestimmungsgemäßen Elektrolysebetrieb über die Energieversorgungsleitung (30) mit elektrischer Energie versorgt zu werden, wobei die Energieversorgungsleitung (30) zum elektrischen Koppeln einer elektrischen Energiequelle (32) ausgebildet ist, wobei die Elektrolysevorrichtungen (34, 36) jeweils eine Energieversorgungseinheit (38, 40) und wenigstens ein mit der Energieversorgungseinheit (38, 40) elektrisch gekoppeltes Elektrolysemodul (12, 14, 16, 18, 20, 22, 24, 26) aufweisen, wobei das wenigstens eine Elektrolysemodul (12, 14, 16, 18, 20, 22, 24, 26) eine Mehrzahl von Elektrolysezellen aufweist, die elektrisch zumindest teilweise in Reihe geschaltet oder parallelgeschaltet sind, wobei die Energieversorgungseinheiten (38, 40) der Elektrolysevorrichtungen (34, 36) jeweils wenigstens einen Transformator (42, 44, 46, 48) und wenigstens eine Gleichrichtereinheit (50, 52, 54, 56, 58, 60, 62, 64) aufweisen, wobei der wenigstens eine Transformator (42, 44, 46, 48) eine mit der Energieversorgungsleitung (30) elektrisch gekoppelte Primärwicklung (66, 68, 70, 72) und eine an eine Wechselspannungsseite der wenigstens einen Gleichrichtereinheit (50, 52, 54, 56, 58, 60, 62, 64) angeschlossene Sekundärwicklung (74, 76, 78, 80, 82, 84, 86, 88) aufweist, wobei eine Gleichspannungsseite der wenigstens einen Gleichrichtereinheit (50, 52, 54, 56, 58, 60, 62, 64) mit dem wenigstens einen Elektrolysemodul (12, 14, 16, 18, 20, 22, 24, 26) elektrisch gekoppelt ist,
**gekennzeichnet durch**,
eine an die Energieversorgungsleitung (30) angeschlossene Energiespeichereinheit (28) zum reversiblen Speichern von elektrischer Energie, wobei die Energiespeichereinheit (28) ausgebildet ist, elektrische Energie kontinuierlich steuerbar zu speichern und abzugeben, wobei die Primärwicklung (70, 72) des wenigstens einen Transformators (46, 48) von wenigstens einer ersten der Elektrolysevorrichtungen (36) gestuft einstellbar ausgebildet ist und die wenigstens eine Gleichrichtereinheit (58, 60, 62, 64) der Energieversorgungseinheit (40) dieser Elektrolysevorrichtung (36) ausgebildet ist, ungesteuert betrieben zu werden.

4. Elektrolyseanlage nach Anspruch 3, **dadurch gekennzeichnet, dass** die wenigstens eine Gleichrichtereinheit (50, 52, 54, 56) der Energieversorgungseinheit (38) von der wenigstens einen zweiten Elektrolysevorrichtung (34) ausgebildet ist, abhängig von durch die Energiequelle (32) bereitstellbarer elektrischer Energie gesteuert betrieben zu werden.

5. Elektrolyseanlage nach einem der Ansprüche 2 bis 4, **dadurch gekennzeichnet, dass** eine Bemessungsleistung der Energiespeichereinheit (28) in Bezug auf das Speichern und das Abgeben von elektrischer Energie größer als eine Leistungsdifferenz von zwei aufeinanderfolgenden Stufen der gestuft einstellbaren Primärwicklung (70, 72) im bestimmungsgemäßen Betrieb der wenigstens einen ersten Elektrolysevorrichtung (40) ist.

6. Elektrolyseanlage nach einem der Ansprüche 2 bis 5, **gekennzeichnet durch** eine Steuereinheit (76), die ausgebildet ist, ein Energieverfügbarkeitssignal zu empfangen und abhängig vom Energieverfügbarkeitssignal einerseits die Stufe der Primärwicklung (70, 72) des wenigstens einen Transformators (46, 48) von der wenigstens einen ersten Elektrolysevorrichtung (36) einzustellen und andrerseits zumindest die elektrische Leistung der wenigstens einen zweiten Elektrolysevorrichtung (34) mittels deren Gleichrichtereinheit (50, 52, 54, 56) oder zumindest die elektrische Leistung der Energiespeichereinheit (28) einzustellen.

7. Elektrolyseanlage nach einem der Ansprüche 2 bis 6, **dadurch gekennzeichnet, dass** eine Summe der Bemessungsleistung der Energiespeichereinheit (28) in Bezug auf das Speichern und das Abgeben von elektrischer Energie und der Bemessungsleistung der wenigstens einen gesteuert betreibbaren Gleichrichtereinheit (50, 52, 54, 56) der Energieversorgungseinheit (38) von der wenigstens einen zweiten Elektrolysevorrichtung (34) größer als die Leistungsdifferenz von zwei aufeinanderfolgenden Stufen der gestuft einstellbaren Primärwicklung (70, 72) im bestimmungsgemäßen Betrieb der wenigstens einen ersten Elektrolysevorrichtung (36) ist.

8. Elektrolyseanlage nach einem der vorhergehenden Ansprüche, **dadurch gekennzeichnet, dass** der wenigstens eine Transformator (46, 48) zum gestuften Einstellen der Primärwicklung (70, 72) einen Stufenschalter mit wenigstens 5 Stufen, vorzugsweise wenigstens 9 Stufen, aufweist.

9. Verfahren zum Erzeugen von Wasserstoff und Sauerstoff durch eine Elektrolyse von Wasser mittels einer Elektrolyseanlage (10), die eine Mehrzahl von Elektrolysevorrichtungen (34, 36) aufweist, wobei die Elektrolysevorrichtungen (34, 36) jeweils eine Energieversorgungseinheit (38, 40) und wenigstens ein mit der Energieversorgungseinheit (38, 40) elektrisch gekoppeltes Elektrolysemodul (12, 14, 16, 18, 20, 22, 24, 26) aufweisen, wobei das wenigstens eine Elektrolysemodul (12, 14, 16, 18, 20, 22, 24, 26) eine Mehrzahl von Elektrolysezellen aufweist, die elektrisch zumindest teilweise in Reihe geschaltet oder parallelgeschaltet sind, wobei die Elektrolysevorrichtungen (34, 36) über eine mit einer elektrischen Wechselspannung beaufschlagte elektrische Energieversorgungsleitung (30) für den bestimmungsgemäßen Elektrolysebetrieb mit elektrischer Energie versorgt werden, wobei die Energieversorgungsleitung (30) eine elektrische Energiequelle (32) elektrisch koppelt, wobei die Energieversorgungseinheiten (38, 40) der Elektrolysevorrichtungen (34, 36) jeweils wenigstens einen Transformator (42, 44 46, 48) und wenigstens eine Gleichrichtereinheit (50, 52, 54, 56, 58, 60, 62, 64) aufweisen, wobei der wenigstens eine Transformator (42, 44, 46, 48) eine mit der Energieversorgungsleitung (30) elektrisch gekoppelte Primärwicklung (66, 68, 70 , 72) und eine an eine Wechselspannungsseite der wenigstens einen Gleichrichtereinheit (50, 52, 54, 56, 58, 60, 62, 64) angeschlossene Sekundärwicklung (74, 76, 78, 80, 82, 84, 86, 88) aufweist, wobei eine Gleichspannungsseite der wenigstens einen Gleichrichtereinheit (50, 52, 54, 56, 58, 60, 62, 64) mit dem wenigstens einen Elektrolysemodul elektrisch gekoppelt ist,
**dadurch gekennzeichnet, dass**
die Primärwicklung (70, 72) des wenigstens einen Transformators (46, 48) von wenigstens einer ersten der Elektrolysevorrichtungen (34) gestuft einstellbar ausgebildet ist und die wenigstens eine Gleichrichtereinheit (58, 60, 62, 64) der Energieversorgungseinheit (38) dieser Elektrolysevorrichtung (34) ungesteuert betrieben wird, wobei die wenigstens eine Gleichrichtereinheit (50, 52, 54, 56) der Energieversorgungseinheit (40) von wenigstens einer zweiten der Elektrolysevorrichtungen (36) abhängig von durch die Energiequelle (32) bereitstellbarer elektrischer Energie gesteuert betrieben wird.

10. Verfahren zum Erzeugen von Wasserstoff und Sauerstoff durch eine Elektrolyse von Wasser mittels einer Elektrolyseanlage (10), die eine Mehrzahl von Elektrolysevorrichtungen (34, 36) aufweist, wobei die Elektrolysevorrichtungen (34, 36) jeweils eine Energieversorgungseinheit (38, 40) und wenigstens ein mit der Energieversorgungseinheit (38, 40) elektrisch gekoppeltes Elektrolysemodul (12, 14, 16, 18, 20, 22, 24, 26) aufweisen, wobei das wenigstens eine Elektrolysemodul (12, 14, 16, 18, 20, 22, 24, 26) eine Mehrzahl von Elektrolysezellen aufweist, die elektrisch zumindest teilweise in Reihe geschaltet oder parallelgeschaltet sind, wobei die Elektrolysevorrichtungen (34, 36) über eine mit einer elektrischen Wechselspannung beaufschlagte elektrische Energieversorgungsleitung (30) für den bestimmungsgemäßen Elektrolysebetrieb mit elektrischer Energie versorgt werden, wobei die Energieversorgungsleitung (30) eine elektrische Energiequelle (32) elektrisch koppelt, wobei die Energieversorgungseinheiten (38, 40) der Elektrolysevorrichtungen (34, 36) jeweils wenigstens einen Transformator (42, 44 46, 48) und wenigstens eine Gleichrichtereinheit (50, 52, 54, 56, 58, 60, 62, 64) aufweisen, wobei der wenigstens eine Transformator (42, 44, 46, 48) eine mit der Energieversorgungsleitung (30) elektrisch gekoppelte Primärwicklung (66, 68, 70 , 72) und eine an eine Wechselspannungsseite der wenigstens einen Gleichrichtereinheit (50, 52, 54, 56, 58, 60, 62, 64) angeschlossene Sekundärwicklung (74, 76, 78, 80, 82, 84, 86, 88) aufweist, wobei eine Gleichspannungsseite der wenigstens einen Gleichrichtereinheit (50, 52, 54, 56, 58, 60, 62, 64) mit dem wenigstens einen Elektrolysemodul elektrisch gekoppelt ist,
**dadurch gekennzeichnet, dass**
eine an die Energieversorgungsleitung (30) angeschlossene Energiespeichereinheit (28), die ausgebildet ist, elektrische Energie reversibel zu speichern, die elektrische Energie kontinuierlich steuerbar speichert und abgibt, wobei die Primärwicklung (70, 72) des wenigstens einen Transformators (46, 48) von wenigstens einer ersten der Elektrolysevorrichtungen (34) gestuft einstellbar ausgebildet ist und die wenigstens eine Gleichrichtereinheit (58, 60, 62, 64) der Energieversorgungseinheit (38) dieser Elektrolysevorrichtung (34) ungesteuert betrieben wird.

## Claims

1. An electrolysis system (10) for producing hydrogen and oxygen by electrolysing water, comprising a plurality of electrolysis devices (34, 36) connected to an electrical energy supply line (30) to which an electrical AC voltage is applied in order to be supplied with electrical energy via the energy supply line (30) for the intended electrolysis operation, wherein the energy supply line (30) is configured for electrically coupling an electrical energy source (32), wherein the electrolysis devices (34, 36) each have an energy supply unit (38, 40) and at least one electrolysis module (12, 14, 16, 18, 20, 22, 24, 26) electrically coupled to the energy supply unit (38, 40), wherein the at least one electrolysis module (12, 14, 16, 18, 20, 22, 24, 26) has a plurality of electrolysis cells at least partially electrically connected in series or in parallel, wherein the energy supply units (38, 40) of the electrolysis devices (34, 36) each have at least one transformer (42, 44, 46, 48) and at least one rectifier unit (50, 52, 54, 56, 58, 60, 62, 64), wherein the at least one transformer (42, 44, 46, 48) has a primary winding (66, 68, 70, 72) electrically coupled to the energy supply line (30) and a secondary winding (74, 76, 78, 80, 82, 84, 86, 88) connected to an AC voltage side of the at least one rectifier unit (50, 52, 54, 56, 58, 60, 62, 64), wherein a DC voltage side of the at least one rectifier unit (50, 52, 54, 56, 58, 60, 62, 64) is electrically coupled to the at least one electrolysis module (12, 14, 16, 18, 20, 22, 24, 26), **characterised in that**
the primary winding (66, 68, 70, 72) of the at least one transformer (42, 44, 46, 48) of at least one first of the electrolysis devices (36) is configured to be gradually adjustable, and the at least one rectifier unit (58, 60, 62, 64) of the energy supply unit (40) of this electrolysis device (36) is configured to be operated in an uncontrolled manner, wherein the at least one rectifier unit (50, 52, 54, 56) of the energy supply unit (38) of at least one second of the electrolysis devices (34) is configured to be operated in a controlled manner depending on electrical energy providable by the energy source (32).

2. The electrolysis system according to claim 1, **characterised by** an energy storage unit (28) connected to the energy supply line (30) for reversibly storing electrical energy, wherein the energy storage unit (28) is configured to store and deliver electrical energy in a continuously controllable manner.

3. An electrolysis system (10) for producing hydrogen and oxygen by electrolysing water, comprising a plurality of electrolysis devices (34, 36) connected to an electrical energy supply line (30) to which an electrical AC voltage is applied in order to be supplied with electrical energy for the intended electrolysis operation via the energy supply line (30), wherein the energy supply line (30) is configured for electrically coupling an electrical energy source (32), wherein the electrolysis devices (34, 36) each have an energy supply unit (38, 40) and at least one electrolysis module (12, 14, 16, 18, 20, 22, 24, 26) electrically coupled to the energy supply unit (38, 40), wherein the at least one electrolysis module (12, 14, 16, 18, 20, 22, 24, 26) has a plurality of electrolysis cells at least partially electrically connected in series or in parallel, wherein the energy supply units (38, 40) of the electrolysis devices (34, 36) each have at least one transformer (42, 44, 46, 48) and at least one rectifier unit (50, 52, 54, 56, 58, 60, 62, 64), wherein the at least one transformer (42, 44, 46, 48) has a primary winding (66, 68, 70, 72) electrically coupled to the energy supply line (30) and a secondary winding (74, 76, 78, 80, 82, 84, 86, 88) connected to an AC voltage side of the at least one rectifier unit (50, 52, 54, 56, 58, 60, 62, 64), wherein a DC voltage side of the at least one rectifier unit (50, 52, 54, 56, 58, 60, 62, 64) is electrically coupled to the at least one electrolysis module (12, 14, 16, 18, 20, 22, 24, 26), **characterised by**
an energy storage unit (28) connected to the energy supply line (30) for reversibly storing electrical energy, wherein the energy storage unit (28) is configured to store and deliver electrical energy in a continuously controllable manner, wherein the primary winding (70, 72) of the at least one transformer (46, 48) of at least one first of the electrolysis devices (36) is configured to be gradually adjustable, and the at least one rectifier unit (58, 60, 62, 64) of the energy supply unit (40) of this electrolysis device (36) is configured to be operated in an uncontrolled manner.

4. The electrolysis system according to claim 3, **characterised in that** the at least one rectifier unit (50, 52, 54, 56) of the energy supply unit (38) of the at least one second electrolysis device (34) is configured to be operated in a controlled manner depending on the electrical energy providable by the energy source (32).

5. The electrolysis system according to any one of claims 2 to 4, **characterised in that** a rated power of the energy storage unit (28) with respect to storing and delivering electrical energy is greater than a power difference of two successive stages of the gradually adjustable primary winding (70, 72) in the intended operation of the at least one first electrolysis device (40).

6. The electrolysis system according to any one of claims 2 to 5, **characterised by** a control unit (76) configured to receive an energy availability signal and, on the one hand, to adjust, depending on the energy availability signal, the stage of the primary winding (70, 72) of the at least one transformer (46, 48) of the at least one first electrolysis device (36) and to adjust, on the other hand, at least the electrical power of the at least one second electrolysis device (34) by means of its rectifier unit (50, 52, 54, 56) or at least the electrical power of the energy storage unit (28).

7. The electrolysis system according to any one of claims 2 to 6, **characterised in that** a sum of the rated power of the energy storage unit (28) with respect to storing and delivering electrical energy and the rated power of the at least one rectifier unit (50, 52, 54, 56) of the energy supply unit (38) of the at least one second electrolysis device (34), which can be operated in a controlled manner, is greater than the power difference of two successive stages of the gradually adjustable primary winding (70, 72) in the intended operation of the at least one first electrolysis device (36).

8. The electrolysis system according to any one of the preceding claims, **characterised in that** the at least one transformer (46, 48) has a tap changer with at least 5 steps, preferably at least 9 steps, for gradually adjusting the primary winding (70, 72).

9. A method for producing hydrogen and oxygen by electrolysing water by means of an electrolysis system (10) having a plurality of electrolysis devices (34, 36), wherein the electrolysis devices (34, 36) each have an energy supply unit (38, 40) and at least one electrolysis module (12, 14, 16, 18, 20, 22, 24, 26) electrically coupled to the energy supply unit (38, 40), wherein the at least one electrolysis module (12, 14, 16, 18, 20, 22, 24, 26) has a plurality of electrolysis cells at least partially electrically connected in series or in parallel, wherein the electrolysis devices (34, 36) are supplied with electrical energy via an electrical energy supply line (30), to which an electrical AC voltage is applied, for the intended electrolysis operation, wherein the energy supply line (30) electrically couples an electrical energy source (32), wherein the energy supply units (38, 40) of the electrolysis devices (34, 36) each have at least one transformer (42, 44, 46, 48) and at least one rectifier unit (50, 52, 54, 56, 58, 60, 62, 64), wherein the at least one transformer (42, 44, 46, 48) has a primary winding (66, 68, 70, 72) electrically coupled to the energy supply line (30) and a secondary winding (74, 76, 78, 80, 82, 84, 86, 88) connected to an AC voltage side of the at least one rectifier unit (50, 52, 54, 56, 58, 60, 62, 64), wherein a DC voltage side of the at least one rectifier unit (50, 52, 54, 56, 58, 60, 62, 64) is electrically coupled to the at least one electrolysis module,
**characterised in that**
the primary winding (70, 72) of the at least one transformer (46, 48) of at least one first of the electrolysis devices (34) is configured to be gradually adjustable, and the at least one rectifier unit (58, 60, 62, 64) of the energy supply unit (38) of this electrolysis device (34) is operated in an uncontrolled manner, wherein the at least one rectifier unit (50, 52, 54, 56) of the energy supply unit (40) of at least one second of the electrolysis devices (36) is operated in a controlled manner depending on electrical energy providable by the energy source (32).

10. A method for producing hydrogen and oxygen by electrolysing water by means of an electrolysis system (10) having a plurality of electrolysis devices (34, 36), wherein the electrolysis devices (34, 36) each have an energy supply unit (38, 40) and at least one electrolysis module (12, 14, 16, 18, 20, 22, 24, 26) electrically coupled to the energy supply unit (38, 40), wherein the at least one electrolysis module (12, 14, 16, 18, 20, 22, 24, 26) has a plurality of electrolysis cells at least partially electrically connected in series or in parallel, wherein the electrolysis devices (34, 36) are supplied with electrical energy via an electrical energy supply line (30), to which an electrical AC voltage is applied, for the intended electrolysis operation, wherein the energy supply line (30) electrically couples an electrical energy source (32), wherein the energy supply units (38, 40) of the electrolysis devices (34, 36) each have at least one transformer (42, 44, 46, 48) and at least one rectifier unit (50, 52, 54, 56, 58, 60, 62, 64), wherein the at least one transformer (42, 44, 46, 48) has a primary winding (66, 68, 70, 72) electrically coupled to the energy supply line (30) and a secondary winding (74, 76, 78, 80, 82, 84, 86, 88) connected to an AC voltage side of the at least one rectifier unit (50, 52, 54, 56, 58, 60, 62, 64), wherein a DC voltage side of the at least one rectifier unit (50, 52, 54, 56, 58, 60, 62, 64) is electrically coupled to the at least one electrolysis module,
**characterised in that**
an energy storage unit (28) connected to the energy supply line (30) and configured to reversibly store electrical energy, stores and delivers electrical energy in a continuously controllable manner, wherein the primary winding (70, 72) of the at least one transformer (46, 48) of at least one first of the electrolysis devices (34) is configured to be gradually adjustable, and the at least one rectifier unit (58, 60, 62, 64) of the energy supply unit (38) of this electrolysis device (34) is operated in an uncontrolled manner.

## Revendications

1. Installation d'électrolyse (10) pour produire de l'hydrogène et de l'oxygène par électrolyse de l'eau, comprenant une pluralité de dispositifs d'électrolyse (34, 36), qui sont reliés à une ligne d'alimentation en énergie électrique (30) soumise à une tension alternative électrique, afin d'être alimentés en énergie électrique par l'intermédiaire de la ligne d'alimentation en énergie (30) pour le fonctionnement normal d'électrolyse, dans laquelle la ligne d'alimentation en énergie (30) est conçue pour relier électriquement une source d'énergie électrique (32), dans laquelle les dispositifs d'électrolyse (34, 36) présentent chacun une unité d'alimentation en énergie (38, 40) et au moins un module d'électrolyse (12, 14, 16, 18, 20, 22, 24, 26) relié électriquement à l'unité d'alimentation en énergie (38, 40), dans laquelle l'au moins un module d'électrolyse (12, 14, 16, 18, 20, 22, 24, 26) présente une pluralité de cellules d'électrolyse, qui sont reliées électriquement au moins partiellement en série ou en parallèle, dans laquelle les unités d'alimentation en énergie (38, 40) des dispositifs d'électrolyse (34, 36) présentent chacune au moins un transformateur (42, 44, 46, 48) et au moins une unité de redressement (50, 52, 54, 56, 58, 60, 62, 64), dans laquelle au moins un transformateur (42, 44, 46, 48) présente un enroulement primaire (66, 68, 70, 72) relié électriquement à la ligne d'alimentation en énergie (30) et un enroulement secondaire (74, 76, 78, 80, 82, 84, 86, 88) relié à un côté à tension alternative de l'au moins une unité de redressement (50, 52, 54, 56, 58, 60, 62, 64), dans laquelle un côté à tension continue de l'au moins une unité de redressement (50, 52, 54, 56, 58, 60, 62, 64) est relié électriquement à l'au moins un module d'électrolyse (12, 14, 16, 18, 20, 22, 24, 26), **caractérisée en ce que** l'enroulement primaire (66, 68, 70, 72) de l'au moins un transformateur (42, 44, 46, 48) d'au moins un premier des dispositifs d'électrolyse (36) soit conçu pour être réglable par paliers et que l'au moins une unité de redressement (58, 60, 62, 64) de l'unité d'alimentation en énergie (40) de ce dispositif d'électrolyse (36) soit conçue pour fonctionner de manière non pilotée, tandis que l'au moins une unité de redressement (50, 52, 54, 56) de l'unité d'alimentation en énergie (38) d'au moins un deuxième des dispositifs d'électrolyse (34) est conçue pour fonctionner de manière pilotée en fonction de l'énergie électrique disponible auprès de la source d'énergie (32).

2. Installation d'électrolyse selon la revendication 1, **caractérisée par** une unité de stockage d'énergie (28) reliée à la ligne d'alimentation en énergie (30) pour stocker de manière réversible de l'énergie électrique, dans laquelle l'unité de stockage d'énergie (28) est conçue pour stocker et restituer de l'énergie électrique de manière réglable en continu.

3. Installation d'électrolyse (10) pour produire de l'hydrogène et de l'oxygène par électrolyse de l'eau, comprenant une pluralité de dispositifs d'électrolyse (34, 36), qui sont reliés à une ligne d'alimentation en énergie électrique (30) soumise à une tension alternative électrique, afin d'être alimentés en énergie électrique par l'intermédiaire de la ligne d'alimentation en énergie (30) pour le fonctionnement normal d'électrolyse, dans laquelle la ligne d'alimentation en énergie (30) est conçue pour relier électriquement une source d'énergie électrique (32), dans laquelle les dispositifs d'électrolyse (34, 36) présentent chacun une unité d'alimentation en énergie (38, 40) et au moins un module d'électrolyse (12, 14, 16, 18, 20, 22, 24, 26) relié électriquement à l'unité d'alimentation en énergie (38, 40), dans laquelle l'au moins un module d'électrolyse (12, 14, 16, 18, 20, 22, 24, 26) présente une pluralité de cellules d'électrolyse, qui sont reliées électriquement au moins partiellement en série ou en parallèle, dans laquelle les unités d'alimentation en énergie (38, 40) des dispositifs d'électrolyse (34, 36) présentent chacune au moins un transformateur (42, 44, 46, 48) et au moins une unité de redressement (50, 52, 54, 56, 58, 60, 62, 64), dans laquelle l'au moins un transformateur (42, 44, 46, 48) présente un enroulement primaire (66, 68, 70, 72) relié électriquement à la ligne d'alimentation en énergie (30) et un enroulement secondaire (74, 76, 78, 80, 82, 84, 86, 88) relié à un côté à tension alternative de l'au moins une unité de redressement (50, 52, 54, 56, 58, 60, 62, 64), dans laquelle un côté à tension continue de l'au moins une unité de redressement (50, 52, 54, 56, 58, 60, 62, 64) est relié électriquement à l'au moins un module d'électrolyse (12, 14, 16, 18, 20, 22, 24, 26), **caractérisée par** une unité de stockage d'énergie (28) reliée à la ligne d'alimentation en énergie (30) pour stocker de manière réversible de l'énergie électrique, dans laquelle l'unité de stockage d'énergie (28) est conçue pour stocker et restituer de l'énergie électrique de manière réglable en continu, dans laquelle l'enroulement primaire (70, 72) de l'au moins un transformateur (46, 48) d'au moins un premier des dispositifs d'électrolyse (36) est conçu pour être réglable par paliers et l'au moins une unité de redressement (58, 60, 62, 64) de l'unité d'alimentation en énergie (40) de ce dispositif d'électrolyse (36) est conçue pour fonctionner de manière non pilotée.

4. Installation d'électrolyse selon la revendication 3, **caractérisée en ce que** l'au moins une unité de redressement (50, 52, 54, 56) de l'unité d'alimentation en énergie (38) de l'au moins un deuxième dispositif d'électrolyse (34) soit conçue pour fonctionner de manière pilotée en fonction de l'énergie électrique disponible auprès de la source d'énergie (32).

5. Installation d'électrolyse selon l'une quelconque des revendications 2 à 4, **caractérisée en ce qu'**une puissance assignée de l'unité de stockage d'énergie (28) pour le stockage et la restitution d'énergie électrique soit supérieure à une différence de puissance de deux paliers successifs de l'enroulement primaire (70, 72) réglable par paliers lors du fonctionnement normal de l'au moins un premier dispositif d'électrolyse (40).

6. Installation d'électrolyse selon l'une quelconque des revendications 2 à 5, **caractérisée par** une unité de commande (76) conçue pour recevoir un signal de disponibilité d'énergie et, en fonction du signal de disponibilité d'énergie, pour régler, d'une part, le palier de l'enroulement primaire (70, 72) de l'au moins un transformateur (46, 48) de l'au moins un premier dispositif d'électrolyse (36) et, d'autre part, pour régler au moins la puissance électrique de l'au moins un deuxième dispositif d'électrolyse (34) via son unité de redressement (50, 52, 54, 56) ou au moins la puissance électrique de l'unité de stockage d'énergie (28).

7. Installation d'électrolyse selon l'une quelconque des revendications 2 à 6, **caractérisée en ce qu'**une somme de la puissance assignée de l'unité de stockage d'énergie (28) pour le stockage et la restitution d'énergie électrique et de la puissance assignée de l'au moins une unité de redressement pouvant fonctionner de manière pilotée (50, 52, 54, 56) de l'unité d'alimentation en énergie (38) de l'au moins un deuxième dispositif d'électrolyse (34) soit supérieure à la différence de puissance de deux paliers successifs de l'enroulement primaire (70, 72) réglable par paliers lors du fonctionnement normal de l'au moins un premier dispositif d'électrolyse (36).

8. Installation d'électrolyse selon l'une quelconque des revendications précédentes, **caractérisée en ce que** l'au moins un transformateur (46, 48) présente, pour le réglage par paliers de l'enroulement primaire (70, 72), un commutateur à prises avec au moins 5 paliers, éventuellement au moins 9 paliers.

9. Procédé de production d'hydrogène et d'oxygène par électrolyse de l'eau au moyen d'une installation d'électrolyse (10), qui présente une pluralité de dispositifs d'électrolyse (34, 36), dans lequel les dispositifs d'électrolyse (34, 36) présentent chacun une unité d'alimentation en énergie (38, 40) et au moins un module d'électrolyse (12, 14, 16, 18, 20, 22, 24, 26) relié électriquement à l'unité d'alimentation en énergie (38, 40), dans lequel l'au moins un module d'électrolyse (12, 14, 16, 18, 20, 22, 24, 26) présente une pluralité de cellules d'électrolyse, qui sont reliées électriquement au moins partiellement en série ou en parallèle, dans lequel les dispositifs d'électrolyse (34, 36) sont alimentés en énergie électrique par l'intermédiaire d'une ligne d'alimentation en énergie électrique (30) soumise à une tension alternative électrique pour le fonctionnement normal d'électrolyse, dans lequel la ligne d'alimentation en énergie (30) relie électriquement une source d'énergie électrique (32), dans lequel les unités d'alimentation en énergie (38, 40) des dispositifs d'électrolyse (34, 36) présentent chacune au moins un transformateur (42, 44, 46, 48) et au moins une unité de redressement (50, 52, 54, 56, 58, 60, 62, 64), dans lequel l'au moins un transformateur (42, 44, 46, 48) présente un enroulement primaire (66, 68, 70, 72) relié électriquement à la ligne d'alimentation en énergie (30) et un enroulement secondaire (74, 76, 78, 80, 82, 84, 86, 88) relié à un côté à tension alternative de l'au moins une unité de redressement (50, 52, 54, 56, 58, 60, 62, 64), dans lequel un côté à tension continue de l'au moins une unité de redressement (50, 52, 54, 56, 58, 60, 62, 64) est relié électriquement à l'au moins un module d'électrolyse, **caractérisé en ce que**
l'enroulement primaire (70, 72) de l'au moins un transformateur (46, 48) d'au moins un premier des dispositifs d'électrolyse (34) soit conçu pour être réglable par paliers et que l'au moins une unité de redressement (58, 60, 62, 64) de l'unité d'alimentation en énergie (38) de ce dispositif d'électrolyse (34) fonctionne de manière non pilotée, tandis que l'au moins une unité de redressement (50, 52, 54, 56) de l'unité d'alimentation en énergie (40) d'au moins un deuxième des dispositifs d'électrolyse (36) fonctionne de manière pilotée en fonction de l'énergie électrique disponible auprès de la source d'énergie (32).

10. Procédé de production d'hydrogène et d'oxygène par électrolyse de l'eau au moyen d'une installation d'électrolyse (10), qui présente une pluralité de dispositifs d'électrolyse (34, 36), dans lequel les dispositifs d'électrolyse (34, 36) présentent chacun une unité d'alimentation en énergie (38, 40) et au moins un module d'électrolyse (12, 14, 16, 18, 20, 22, 24, 26) relié électriquement à l'unité d'alimentation en énergie (38, 40), dans lequel l'au moins un module d'électrolyse (12, 14, 16, 18, 20, 22, 24, 26) présente une pluralité de cellules d'électrolyse, qui sont reliées électriquement au moins partiellement en série ou en parallèle, dans lequel les dispositifs d'électrolyse (34, 36) sont alimentés en énergie électrique par l'intermédiaire d'une ligne d'alimentation en énergie électrique (30) soumise à une tension alternative électrique pour le fonctionnement normal d'électrolyse, dans lequel la ligne d'alimentation en énergie (30) relie électriquement une source d'énergie électrique (32), dans lequel les unités d'alimentation en énergie (38, 40) des dispositifs d'électrolyse (34, 36) présentent chacune au moins un transformateur (42, 44, 46, 48) et au moins une unité de redressement (50, 52, 54, 56, 58, 60, 62, 64), dans lequel l'au moins un transformateur (42, 44, 46, 48) présente un enroulement primaire (66, 68, 70, 72) relié électriquement à la ligne d'alimentation en énergie (30) et un enroulement secondaire (74, 76, 78, 80, 82, 84, 86, 88) relié à un côté à tension alternative de l'au moins une unité de redressement (50, 52, 54, 56, 58, 60, 62, 64), dans lequel un côté à tension continue de l'au moins une unité de redressement (50, 52, 54, 56, 58, 60, 62, 64) est relié électriquement à l'au moins un module d'électrolyse, **caractérisé en ce que**
une unité de stockage d'énergie (28) reliée à la ligne d'alimentation en énergie (30), conçue pour stocker de l'énergie électrique de manière réversible, stocke et restitue l'énergie électrique de manière réglable en continu, dans lequel l'enroulement primaire (70, 72) de l'au moins un transformateur (46, 48) d'au moins un premier des dispositifs d'électrolyse (34) est conçu pour être réglable par paliers et l'au moins une unité de redressement (58, 60, 62, 64) de l'unité d'alimentation en énergie (38) de ce dispositif d'électrolyse (34) fonctionne de manière non pilotée.
